# EUROPEAN PATENT APPLICATION

(11) **EP 1 026 896 A1**
(43) Date of publication of application: **09.08.2000**
(21) Application number: 00100883.8
(22) Date of filing: 18.01.2000
(51) Int. Cl.: H04N 7/16, H04N 5/44

(54) **Control for display of broadcast material**

(30) Priority: 03.02.1999 GB 9902286; 03.02.1999 GB 9902292
(71) Applicant: Pace Micro Technology PLC, Saltaire, Shipley, BD14 3LF (GB)
(72) Inventor: Smith, Mark, Steeton BD20 6HH (GB)
(74) Representative: Wood, Graham

(57) **Abstract**

The invention relates to a receiver for broadcast data which can be connected via one or a number of RF outlets to one or a number of display means such as television sets and which display material of video, audio or text is generated from the data received. The invention allows the selective enablement and disablement of the RF outputs as a function of time and/or subject matter which allows the control of viewing of the material.

## Description

The invention to which this application relates is a means for allowing parental or guardian control of the display of broadcast material which is received in a premises. Frequently, it is desired that material which is suitable for selected viewing, such as adult oriented material on certain channels, is only viewable by the appropriate person but, commonly, the material is transmitted to receiver apparatus and displayed in an uncontrolled manner by that apparatus so that it is accessible for viewing by a child or other person to whom the display may be regarded as undesirable.

Conventionally, there are several different ways of allowing parental control but all require some form of input such as a code, by the user such as for example, the input of a PIN number. This allows the enablement or disablement of the generation of the material from the apparatus to all other apparatus connected to outputs from the receiver apparatus and so this form of control gives blanket control of the display of material from and signal received by the apparatus and is not output specific in terms of allowing selective control of the material displayed from television display screens connected to the signal receiver in the premises.

Receivers of broadcast data typically have more than one Radio Frequency(RF) outputs by which more than one display means can be connected thereto so that if the display means are television sets, the receiver can generate material in the form of video, audio or text which is watched by person via different television sets in a number of locations in a premises.

The aim of the present invention is to provide a means whereby apparatus for displaying a broadcast signal can be controlled relatively quickly and easily by a person authorised to do so to enable said person to selectively control the viewing of the displayed material by other persons such as children in the premises and especially in relation to the viewing of the material at specific locations in the premises connected to the broadcast signal receiving apparatus.

In a first aspect of the invention there is provided a broadcast data receiving apparatus which is connected to at least one display means for displaying material generated from the received data, said receiving apparatus having at least one RF output through which data representing the material to be displayed is sent to the display means and characterised in that the said data receiving apparatus can be controlled to allow selective enablement or disablement of the RF outputs so as to allow or prevent the passage of the data and hence the viewing of the material.

In one embodiment the RF output is controlled as a function of time. Typically the apparatus includes a clock counter to which the control means for the RF outputs refers.

Typically a plurality of RF outputs are provided, and each can be connected to respective display means. The enablement of each RF output connected to a display means is achieved by the setting by the user of time periods on the data receiver apparatus for each connected RF output during which data can pass along said outputs to the display means connected thereto. The time period for each of the RF outputs can be independently set by the user and controlled by the data receiving apparatus to allow the selective enablement and disablement of the RF outputs For example, if one of the RF outputs of the data receiving apparatus is connected to a television set for watching by a child in a bedroom, an authorised person can control the viewing of the television set in that room by selective control of the RF output for that television set by setting the receiver apparatus to allow data to pass through that RF output until a predetermined time after which, or between which times, the display of material is not possible, as the output is disabled. This function can be used by a parent to ensure that if children are watching the television set in another room they can only do so within predetermined times set by the parent so that if, for example material which is displayed after 9pm in the evening is regarded as being of adult content, the output for the television set viewed by the children is disabled from 9pm onwards until the next morning.

A further embodiment of the invention is that if the receiver is connected to a series of display means via a series of RF outputs, the enablement or disablement for each output can be independently selected and preset. This means that one or a number of display means connected to the receiver can be enabled while others connected to the same receiver are disabled.

In a further embodiment of the invention the control of each or designated RF outputs can be pre-selected so that the RF output may be programmed to be switched on when it is identified that data received by the data receiving apparatus relates to material to be displayed which meets certain criteria such as, for example, films which have a specific classification and it is also possible for different outputs to have different pre-programmed activation settings. Thus, for example one RF output can be controlled to allow the viewing of all material of all criteria while another can be controlled to only allow the passage of data from the receiver to the display means when the material to be generated therefrom has a rating or other indicator below a certain level. It is envisaged that the data received by the receiver apparatus includes data for a particular rating for each programme material, and this rating data may be transmitted at the start of the transmission of data for each programme or alternatively rating data can be sent at intervals for a number of programmes.

It should be appreciated that the control of the RF outputs with respect to the subject matter rating can be used as an alternative to, or in conjunction with, control of the RF outputs as a function of time.

In a further aspect of the invention there is provided a transmission system comprising a means for transmitting digital data from a remote location to at least one data receiving apparatus, said data receiving apparatus processing said data to generate material in the form of video, audio and/or text on a display means connected thereto via an RF output at the receiving apparatus, control means for the enablement or disablement of the said RF output and characterised in that said control means include a user defined material rating control parameter and data is transmitted from the remote location and received at data receiving apparatus includes indication information to provide a rating indicator of the material which can be generated from identified portions of the received data and the rating indicator is compared to the rating control parameter for the RF output and if the rating indicator is within the pre set parameters the RF output is enabled for the display of the material but, if not, the RF output is disabled.

Typically the data receiving apparatus includes a plurality of RF outputs, and an independently selected rating control parameter setting for each of the RF outputs

Specific embodiments of the invention will now be described with reference to the accompanying figures; wherein
Figure 1 illustrates apparatus incorporating one embodiment of the invention,
Figure 2 illustrates a display generated to a user of the system of Figure 1;
Figure 3 illustrates apparatus in accordance with another embodiment of the invention;
Figure 4 illustrates a display which can be generated for a user of the system of Figure 3.

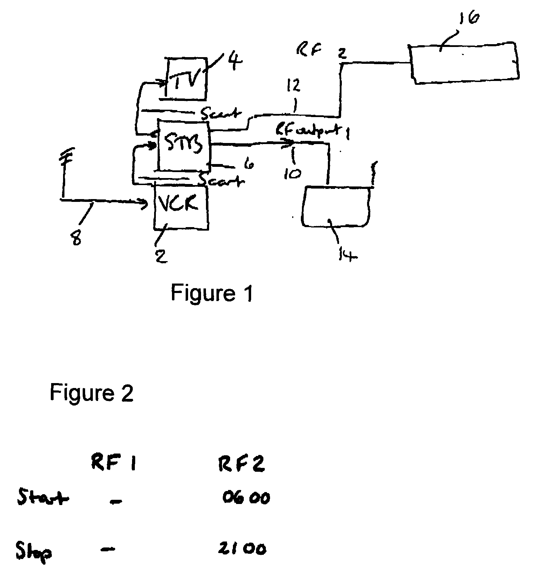

Referring firstly to Figure 1 there is shown a video recorder 2, television set 4 and broadcast data receiving apparatus hereinafter referred to as a receiver 6. Typically the video recorder 2 receives the aerial signal 8 which provides the transmission of data from a remote location via any of terrestrial, satellite, cable transmitted systems and is connected to the receiver 6 and, in turn, television set 4 via RF output SCART connections. In this embodiment the receiver 6 is provided with first and second RF outputs, 10, 12. The first output 10 is connected to a television 14 in another room to be watched by adults and the second RF output is connected to a television set 16 in another room to be watched by children.

Figure 2 illustrates a menu which can be used to display to the viewer of a television set the status settings of, in this case, two RF outputs.

The figure 2 illustrates a menu which can be used to select and set the times for enablement and disablement of each of the outputs, in this case RF 1, numeral 10, and RF2, numeral 12. In the case shown output 1 is indicated on the menu as being enabled to allow viewing throughout 24 hours and this is typically the television set used by the adults. However output 2 is connected to a television set in, for example, a child's bedroom, and the RF output is set to be enabled to allow viewing between 6am and 9pm and disabled to prevent viewing out of these hours. With this setting, it would therefore be impossible for a child watching a television set connected to output 2 to view material broadcast between 9pm and 6am. This setting can be altered and set using remote control facilities as with other menus which are displayed on a television set and said settings are input and stored in the signal receiving means. The settings can be adjusted to suit specific requirements. As an alternative to pre-setting the conditions of RF output, it is also possible to allow manual operation so as to allow manual disablement of an RF output for a period of time such as if, for example, a parent had identified a programme which they did not wish a child to watch they could set the stop and start times of the output to match the programme start and end times respectively.

By using the invention according to this embodiment a parent can be sure that children in another room have no access to programme material transmitted between certain times which may be unsuitable even when the programme is being viewed on the main television set via common signal receiving means.

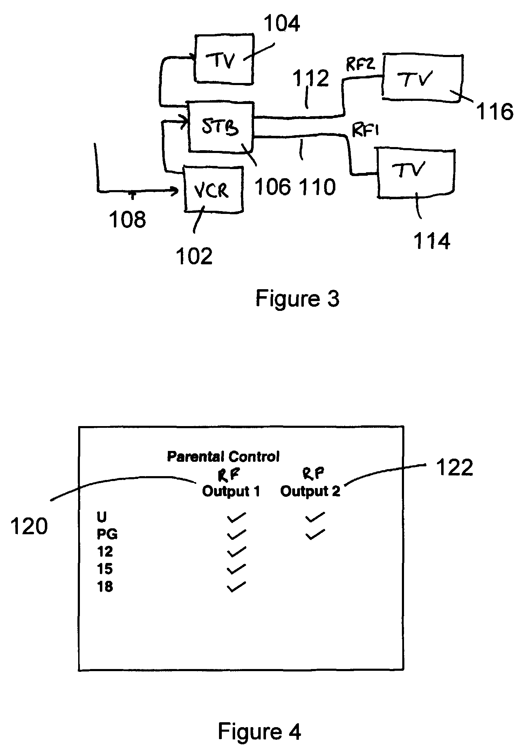

Figure 3 illustrates a further system which in this case incorporates a video recorder 102 although it should be clear that the video recorder is not required for the invention to be operated, television set 104 and receiver 106. Typically the video recorder 102 receives the aerial signal 8 which allows for the reception of data broadcast from a remote location via terrestrial, satellite or cable carried signals, and is connected to the receiver 106 and, in turn, television set 104 via SCART connections at the RF outputs. The receiver 106 is provided with first and second RF outputs, 110, 112. In this embodiment the first output 110 is connected to a television 114 in one room to be watched by adults and second RF output is connected to a television set 116 in another room to be watched by children.

The figure 4 illustrates a menu which can be set by the user to allow automatic disabling or enabling of one or more outputs, in this case output 1, numeral 120 and output 2 numeral 122.. In the case shown the criteria for deciding on enablement or disablement are the classifications of films which are received i.e. U, PG, 12, 15, 18. In the example shown, output 1 is indicated by the ticks on the menu as being enabled to allow viewing of all classifications of films but in the case of output 2 which is connected to a television set in, for example, a child's bedroom, the RF output is activated to allow viewing in relation to films which are classified as U or PG only. With this setting, it would therefore be impossible for a child watching a television set connected to output 2 to view films which have a 12, 15 or 18 rating. This setting can be altered and set using remote control facilities as with other menus which are displayed on a television set and said settings are input and stored in the signal receiving means. The settings can be adjusted as time progresses or to suit specific requirements. As an alternative to pre-setting the conditions of RF output, it is also possible to allow manual operation so as to allow manual disablement of an RF output for a period of time such as if, for example, a parent had identified a programme which they did not wish a child to watch. The activation and deactivation of the RF outputs in accordance with the set parameters occurs in response to data which is transmitted to and received by the receiver. The data indicates, if for example it relates to a film, the classification of the film, in a manner which can be identified by the receiver and then compared with the rating settings stored in the receiver for each of the RF outputs to determine whether the settings allow the transmission of the film data through any of the RF outputs. It is also possible that with the transmission of appropriate data by the data broadcaster that all material to be displayed is provided with rating indicator information

By using the invention according to this application a parent can be sure that children in another room have no access to programme material which may be unsuitable even when the programme is being viewed on the main television set according to the receiver. The provision of the control of the RF outputs allows the set top box to automatically disable the modulator output whenever the identified programme or programmes commence.

## Claims

1. Broadcast data receiving apparatus which is connected to at least one display means for displaying material generated from the received data, said receiving apparatus having at least one RF output through which data representing the material to be displayed is sent to the display means and characterised in that the said data receiving apparatus can be controlled to allow selective enablement or disablement of the RF outputs so as to allow or prevent the passage of the data and hence the viewing of the material.

2. Apparatus according to claim 1 wherein a plurality of RF outputs are provided, each selectively connectable to a display means.

3. Apparatus according to claim 2 characterised in that the enablement and disablement of each RF output is controlled as a function of time.

4. Apparatus according to claim 3 characterised in that the apparatus includes a clock counter to which the control means for the RF outputs refers.

5. Apparatus according to claim 3 characterised in that the enablement of each RF output connected to a display means is achieved by the setting by the user of time periods on the data receiver apparatus for each connected RF output during which data can pass along said outputs to the display means connected thereto.

6. Apparatus according to claim 4 characterised in that the time period for each of the RF outputs can be independently set by the user and controlled by the data receiving apparatus to allow the selective enablement and disablement of the RF outputs.

7. Apparatus according to claim 1 characterised in that a plurality of RF outputs are provided in the data receiving apparatus and the RF outputs can be controlled to be switched enabled and disabled in response to identifying data received by the receiver apparatus which identifies and gives a rating value for portions of data received by the apparatus.

8. Apparatus according to claim 7 characterised in that the enablement or disablement of the RF output is in response to the data receiving apparatus receiving data indicative of the content of portions of the broadcast material, processing the same, comparing with preset identification levels and for the RF output, if the comparison indicates that the RF output should be enabled, data can be sent via the RF output for display on a display means connected thereto, or if the comparison indicates that the RF output should be disabled then no data can be sent through the RF output.

9. Apparatus according to claim 7 characterised in that a plurality of RF outputs are provided and each output can be preset to accept data to criteria, in dependently of the other RF outputs.

10. A transmission system comprising a means for transmitting digital data from a remote location to at least one data receiving apparatus, said data receiving apparatus processing said data to generate material in the form of video, audio and/or text on a display means connected thereto via an RF output at the receiving apparatus, control means for the enablement or disablement of the said RF output and characterised in that said control means include a user defined material rating control parameter and data is transmitted from the remote location and received at data receiving apparatus includes indication information to provide a rating indicator of the material which can be generated from identified portions of the received data and the rating indicator is compared to the rating control parameter for the RF output and if the rating indicator is within the pre set parameters the RF output is enabled for the display of the material but, if not, the RF output is disabled.

11. A system according to claim 10 characterised in that the data receiving apparatus includes a plurality of RF outputs, and an independently selected rating control parameter setting for each of the RF outputs
